# EUROPÄISCHE PATENTANMELDUNG

(11) **EP 1 360 976 A1**
(43) Veröffentlichungstag der Anmeldung: **12.11.2003**
(21) Anmeldenummer: 03009297.7
(22) Anmeldetag: 24.04.2003
(51) Int. Cl.: A63C 5/03

(54) **Schneegleiter**

(30) Priorität: 08.05.2002 DE 20207236 U
(71) Anmelder: Ross, Hilmar, 63457 Hanau (DE)
(72) Erfinder: Ross, Hilmar, 63457 Hanau (DE)
(74) Vertreter: Stoffregen, Hans-Herbert, Dr. Dipl.-Phys.

(57) **Zusammenfassung**

Die Erfindung bezieht sich auf einen Schneegleiter (10) mit einer als Sitz- oder Standfläche ausgebildeten Oberseite und einer flächigen gewölbten Unterseite mit über in Längsrichtung des Schneegleiters sich erstreckenden Kufen (26, 38, 42, 44, 46, 48, 56, 60), von denen in Bezug auf die Längsrichtung des Schneegleiters außermittig verlaufende Kufen in Draufsicht einem nach außen gerichteten gebogenen Verlauf folgen. Um mit konstruktiv einfachen Maßnahmen eine Nutzung bei nahezu allen Schneeverhältnissen und gleichzeitig ein sicheres Lenken des Schneegleiters zu ermöglichen, wird vorgeschlagen dass die Kufen durch aufeinanderfolgende Stufen in der Unterseite des Schneegleiters gebildet sind.

## Beschreibung

Die Erfindung bezieht sich auf Schneegleiter mit einer als Sitz- oder Standfläche ausgebildeten Oberseite und einer flächigen gewölbten Unterseite mit über in Längsrichtung des Schneegleiters sich erstreckenden Kufen, von denen in Bezug auf die Längsrichtung des Schneegleiters außermittig verlaufende Kufen in Draufsicht einem nach außen gerichteten gebogenen Verlauf folgen.

Ein entsprechender Schneegleiter ist der US 3,937,482 zu entnehmen. Der Schneegleiter weist bodenseitig abragende Stege auf, die sich zum Boden hin erstreckende Kanäle begrenzen. Hierdurch bedingt erfolgt durch die außermittig verlaufenden Stege ein Bremsen.

In der WO 96/24411 wird ein Sportgerät beschrieben, das bodenseitig verlaufende Kufen aufweist, die ebenfalls Kanäle begrenzen, die zu einem Bremseffekt führen.

Weitere Schneegleiter sind zum Beispiel der DE 36 04 017 A1 oder der DE 36 01 607 A1 zu entnehmen. Die Schneegleiter sind dabei als Fahrzeugschalen ausgebildet und weisen einen im Querschnitt gewölbten Boden auf, in dem zumindest zwei Kufen vorhanden sind.

Diese erstrecken sich parallel zur Längsachse des Schneegleiters und sind aufgrund der gewölbten Geometrie der Unterseite in Längsrichtung des Schneegleiters gekrümmt. Durch Gewichtsverlagerung und somit Schräglage der Kufen kann eine gewünschte Fahrtrichtungsänderung erreicht werden.

Die stegartigen Kufen können dabei aus dem Boden ausgeformt sein, wobei sich zwischen den einzelnen Kufen rinnenförmige Vertiefungen erstrecken. Dadurch, dass sich der Schneegleiter auf quasi linienförmig verlaufenden Kufen abstützt, ist bei lockerem oder matschigem Schnee eine Beeinträchtigung des Fahrens gegeben. Auch ist durch die Kufengeometrie bedingt eine Fahrtrichtungsbeeinflussung nicht immer im gewünschten Umfang möglich. Ferner ergibt sich ein Bremseffekt.

Der vorliegenden Erfindung liegt das Problem zugrunde, einen Schneegleiter der eingangs genannten Art so weiterzubilden, dass mit konstruktiv einfachen Maßnahmen eine Nutzung bei nahezu allen Schneeverhältnissen möglich ist. Dabei soll gleichzeitig ein sicheres Lenken des Schneegleiters möglich sein. Gleichzeitig soll der Vorteil gegeben sein, dass eine weitgehend flächige Lastabtragung erfolgt.

Erfindungsgemäß wird das Problem im Wesentlichen dadurch gelöst, dass die Kufen durch aufeinanderfolgende Stufen in der Unterseite des Schneegleiters gebildet sind.

Erfindungsgemäß grenzen die durch Stufen gebildeten Kufen unmittelbar aneinander an, so dass infolgedessen die Kufen die oder im Wesentlichen die Fläche der Unterseite des Schneegleiters bilden. Hierdurch bedingt kann eine flächige Lastabtragung erfolgen. Dadurch, dass zumindest die äußeren Kufen einen gebogenen Verlauf zeigen, kann durch Gewichtsverlagerung mit einfachen Maßnahmen ein gezieltes Lenken des Schneegleiters erfolgen. Hierzu ist auch vorgesehen, dass die Unterseite des Schneegleiters symmetrisch zu einer Ebene ausgebildet ist, die die Längsachse des Schneegleiters durchsetzt und senkrecht zur Querachse dieser verläuft.

Durch die Ausbildung der Kufen als Stufen verlaufen bodenseitig kleine Rinnen oder Kanäle, die zu einem Bremseffekt führen.

Um ein sicheres Geradeausfahren zu ermöglichen, ist des Weiteren vorgesehen, dass von Längsachse des Schneegleiters durchsetzte erste Kufe parallel zur Längsachse verläuft. Des Weiteren sollten sich jeweils unmittelbar benachbart zu der ersten Kufe verlaufende zweite Kufen parallel zur Längsachse erstrecken, wobei bevorzugterweise die ersten und die zweiten Kufen beabstandet zur Spitze des Schneegleiters enden und bevorzugterweise in eine gemeinsame ebene Spitzenfläche übergehen.

In Weiterbildung der Erfindung ist vorgesehen, dass unmittelbar benachbart zu der jeweiligen zweiten Kufe verlaufende dritte Kufe in Bezug auf längsachsenfernliegende Kante einem gebogenen Verlauf folgt.

Die weiteren an den von parallel zur Längsachse verlaufenden Kanten begrenzten Kufen angrenzenden äußeren Kufen sollten einen gebogenen Verlauf derart aufweisen, dass endseitige Breite geringer als spitzenseitige ist.

Bevorzugterweise erstrecken sich die Kufen, die jeweils über einem gebogenen Verlauf folgenden Kanten begrenzt sind, bis hin zur Spitze. Dahingehend können diejenigen Kufen, vorzugsweise die dritten Kufen, die längsachsenseitig von einer parallel zur Mittelachse verlaufenden Stufe und längsrandseitig von einer einem gebogenen Verlauf folgenden Stufe begrenzt sind, beabstandet zur Spitze des Schneegleiters enden und in die gemeinsame ebene Spitzenfläche übergehen.

Insbesondere weisen die einem gebogenen Verlauf folgenden Kufen am rückseitigen Ende einen größeren Krümmungsradius als spitzenseitig auf.

Besonders einfach ist ein Lenken des Schneegleiters dann, wenn die Kufen bzw. die Abstützflächen bildenden Stufenflächen in Bezug auf ihre Breite tailliert sind. Dabei kann eine geringfügige Einschnürung der Kufen in ihrer Breite etwa im Bereich der Querachse des Schneegleiters vorliegen.

Besonders gute Fahreigenschaften werden dann erzielt, wenn vorzugsweise die gleiterspitzenseitig endenden Kufen zumindest in einer quer zur Längsachse verlaufenden und in etwa Mitte des Schneegleiters schneidenden Ebene über Stufen ineinander gehen, deren Höhen längsachsenseitig geringer als schneegleiterlängsrandseitig sind. Des Weiteren sollte die Höhe der eine Kufe begrenzenden Stufen spitzenseitig geringer als endseitig sein.

Bevorzugterweise sollte die Unterseite des erfindungsgemäßen Schneegleiters 2 n + 1 Kufen aufweisen, von denen zumindest 2 n, vorzugsweise 2 n - 2 Stufen einem in Bezug auf die Längsachse gebogenen Verlauf folgen, wobei n > 3, vorzugsweise n = 6 sein sollte.

Das Verhältnis zwischen Höhe und Breite der Kufen sollte sich belaufen auf in etwa 1 : 2 bis in etwa 1 : 7.

Um die Geradeausfahrt des erfindungsgemäßen Schneegleiters zu erhöhen, kann von der ersten Stufe ein entlang der Längsachse verlaufender Längssteg abragen.

Zur Erhöhung des Fahrtkomforts und -spaßes kann von der Oberseite des Schneegleiters eine Lenkstange mit Griff ausgehen, die in Richtung des Endes klappbar ausgebildet ist, wodurch der Transport erleichtert wird.

Weitere Einzelheiten, Vorteile und Merkmale der Erfindung ergeben sich nicht nur aus den Ansprüchen, den diesen zu entnehmenden Merkmalen -für sich und/oder in Kombination-, sondern auch aus der nachfolgenden Beschreibung von der Zeichnung zu entnehmenden bevorzugten Ausführungsbeispiel.

Es zeigen:

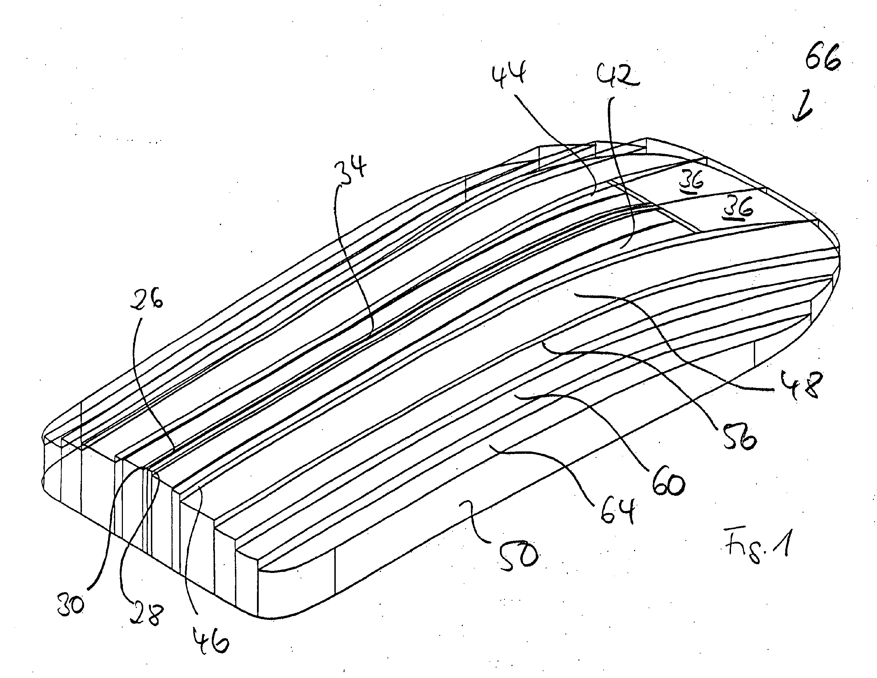

- Fig. 1: in perspektivischer Darstellung in Unteransicht einen Schneegleiter von seiner Rückseite aus,

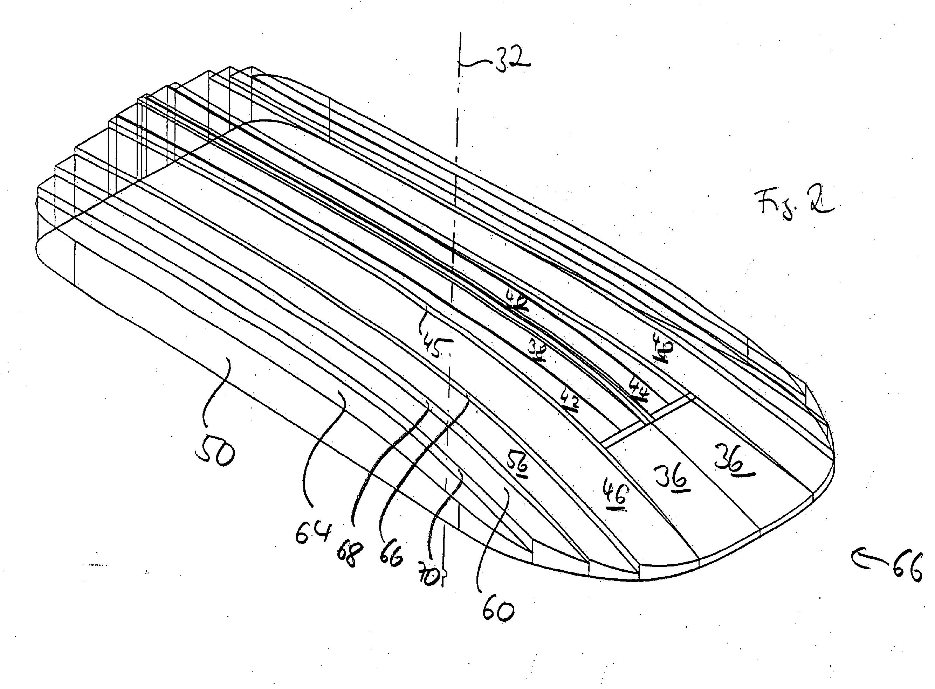

- Fig. 2: eine der Fig. 1 entsprechende Darstellung mit von der Spitze aus betrachtetem Schneegleiter,

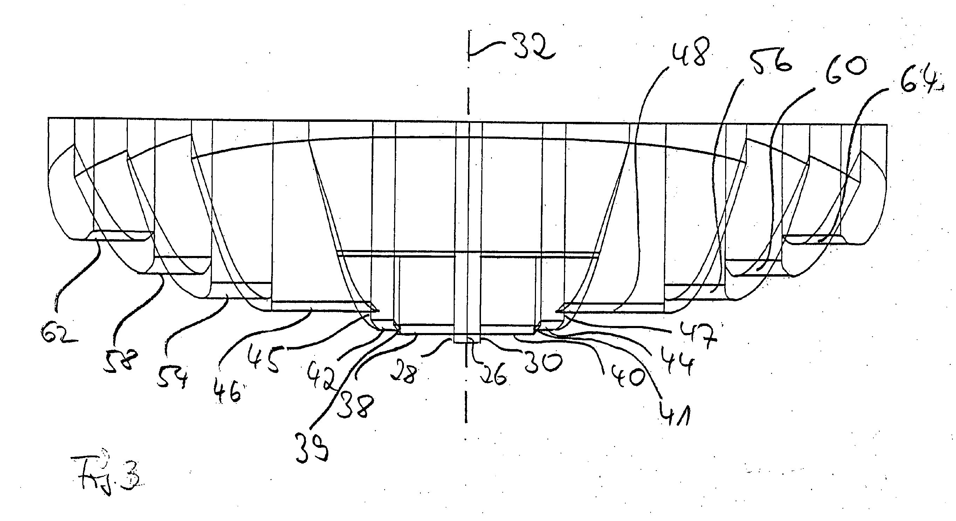

- Fig. 3: eine Vorderansicht des Schneegleiters nach den Fig. 1 und 2,
- Fig. 4: eine Seitenansicht des Schneegleiters nach den Fig. 1 - 3 und
- Fig. 5: eine Unteransicht des Schneegleiters nach den Fig. 1 - 5.

In den Fig. sind verschiedene Darstellungen eines erfindungsgemäß ausgebildeten brettartigen Schneegleiters 10 dargestellt, der eine im Ausführungsbeispiel ebene Oberseite 12 und eine gewölbte Unterseite 14 aufweist. Dabei ist die Unterseite 14 sowohl in Bezug auf Längsachse 16 als auch Querachse 18 des Schneegleiters 10 gekrümmt.

Der Schneegleiter 10 kann aus Kunststoff bestehen und insbesondere ein Blasformteil sein.

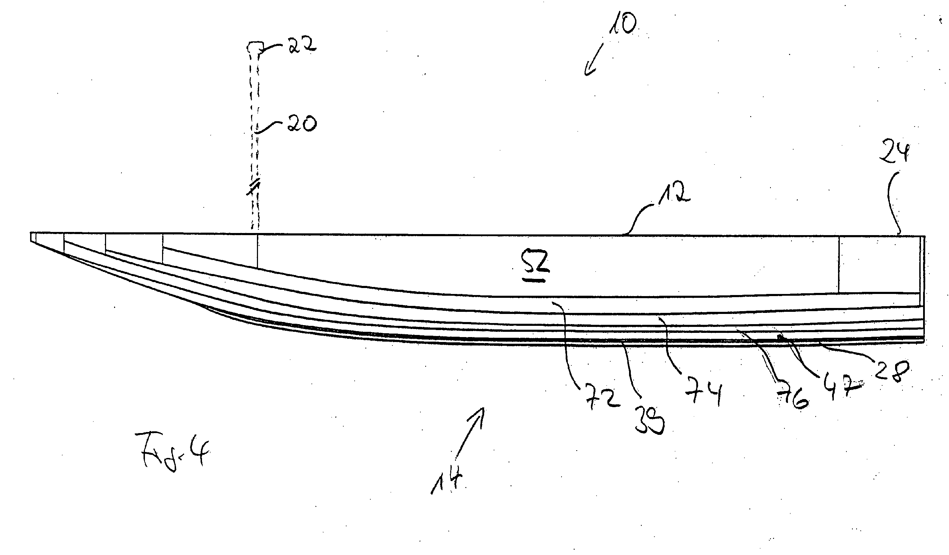

Von der Oberseite 12 kann eine Lenkstange 20 mit Griff 22 ausgehen, die klappbar ist, um einen einfachen Transport des Schneegleiters 10 zu ermöglichen. Entsprechend der Darstellung in Fig. 4 ist ein Klappen nach rechts möglich, also in Richtung Endbereich 24 des Schneegleiters 10.

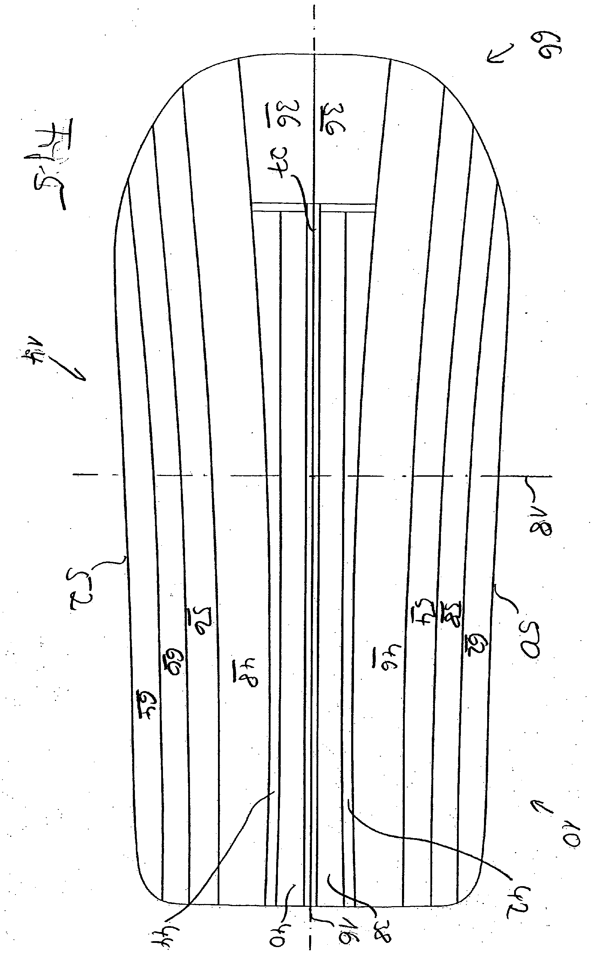

Die Unterseite 14 des Schneegleiters 10 weist durch Stufen voneinander getrennte Kufen auf, die nachstehend näher erläutert werden. Dabei verdeutlicht die Darstellung der Unterseite 14 in Fig. 5, dass die Kufen eine flächige Erstreckung aufweisen, die in Draufsicht auf die Unterseite 14 weitgehend deren Fläche entspricht. Mit anderen Worten gehen die Stufen ineinanderüber, grenzen aneinander.

Eine erste Kufe 26 erstreckt sich entlang der Längsachse 16 und weist über ihre gesamte Länge eine gleichbleibende Breite auf. Dies bedeutet, dass die erste Kufe 26 von Stufen 28, 30 begrenzt sind, die parallel zur Längsachse 16 des Schneegleiters 10 verlaufen. Gegebenenfalls kann von der ersten Kufe 26 ein entlang der Längsachse 16 verlaufender Steg 34 abragen. Die erste Stufe 26 geht in eine spitzenseitig verlaufende ebene Fläche 36 über.

Angrenzend an der ersten Kufe 26 verlaufen zwei ebenfalls geradlinig und parallel zu der Längsachse 16 verlaufende zweite Kufen 38, 40, die gleichfalls in die gemeinsame Spitzenfläche 36 übergehen. Unmittelbar benachbart zu den zweiten Kufen 38, 40 verlaufen dritte Kufen 42, 44, die jedoch einen gebogenen Verlauf derart zeigen, als dass die Kufe 42, 44 endseitig eine geringere Breite als spitzenseitig aufweist. Dies bedeutet, dass die längsrandseitig verlaufende und zu der vierten Stufe 46, 48 führende entlang der Längsachse 16 verlaufende Begrenzungsfläche 45, 47 oder Stufe in Bezug auf jeweiligen Außenlängsrand 50, 52 des Schneegleiters 10 einen konkaven Verlauf zeigt. Auch die dritte Kufe 42, 44 endet im Ausführungsbeispiel in der Spitzenfläche 36.

Die nachfolgenden äußeren Kufen 46, 48, 54, 56, 58, 60, 62, 64 werden von Stufen bzw. Flächen 66, 68, 70, 72, 74, 76 begrenzt, die in Bezug auf den jeweiligen Außenlängsrand 50, 52 des Schneegleiters 10 ebenfalls konkav verlaufen, wobei entsprechend der Darstellung der Fig. 4 die Höhe der Stufen bzw. Flächen 45, 66, 68, 70 bzw. 47, 76, 74, 72 von innen nach außen zunehmen kann.

Des Weiteren können die zumindest einem gebogenen Verlauf folgenden Kufen 42, 44, 46, 48, 54, 56, 58, 60, 62, 64, das heißt deren Abstützflächen im Mittenbereich tailliert sein, wodurch der Radius einer Kurve, die von einem erfindungsgemäßen Schneegleiter 10 durchfahren wird, verkleinert wird.

Unabhängig hiervon sollten die entsprechenden Kufen 42, 44, 46, 48, 54, 56, 58, 60, 62, 64 endseitig einen größeren Krümmungsradius als spitzenseitig aufweisen, also endseitig weniger gekrümmt als spitzenseitig sein.

Des Weiteren wird aus den Fig. deutlich, dass die Stufen bzw. deren die Kufen 26, 38, 40, 42, 44, 46, 48, 54, 56, 58, 60, 62, 64 trennenden Flächen 28, 30, 39, 41, 45, 47, 66, 68, 70, 72, 74, 76 parallel zur Mittelachse 32 des Schneegleiters 10 verlaufen, die sich senkrecht sowohl zur Längsachse 16 als auch zur Querachse 18 des Schneegleiters 10 erstreckt.

## Patentansprüche

1. Schneegleiter (10) mit einer als Sitz- oder Standfläche ausgebildeten Oberseite und einer flächigen gewölbten Unterseite (14) mit über in Längsrichtung des Schneegleiters sich erstreckenden Kufen (26, 38, 40, 42, 44, 46, 48, 54, 56, 58, 60, 62, 64), von denen in Bezug auf die Längsrichtung des Schneegleiters außermittig verlaufende Kufen in Draufsicht einem nach außen gerichteten gebogenen Verlauf folgen,
**dadurch gekennzeichnet,**
**dass** die Kufen (26, 38, 40, 42, 44, 46, 48, 54, 56, 58, 60, 62, 64) durch aufeinanderfolgende Stufen in der Unterseite (14) des Schneegleiters (10) gebildet sind.

2. Schneegleiter nach Anspruch 1,
**dadurch gekennzeichnet,**
**dass** die Kufen (26, 38, 40, 42, 44, 46, 48, 54, 56, 58, 60, 62, 64) mit ihren lastabtragenden Flächen Fläche oder weitgehend Fläche der Unterseite (14) entsprechen und insbesondere Höhe und Breite der Kufen sich verhalten in etwa wie 1:2 bis 1:7.

3. Schneegleiter nach Anspruch 1 oder 2,
**dadurch gekennzeichnet,**
**dass** entlang Längsachse (16) des Schneegleiters (10) verlaufende erste Kufe (26) von parallel zur Längsachse verlaufenden Stufen bzw. Flächen (28, 30) begrenzt ist, wobei insbesondere von der ersten Stufe (26) ein entlang der Längsachse (16) verlaufender Steg (27) abragt.

4. Schneegleiter nach zumindest einem der vorhergehenden Ansprüche,
**dadurch gekennzeichnet,**
**dass** jeweilige unmittelbar benachbart zu der ersten Kufe (26) verlaufende zweite Kufe (38, 40) durch parallel zur Längsachse (16) verlaufende Stufen bzw. Flächen (28, 30, 39, 41) begrenzt ist.

5. Schneegleiter nach zumindest einem der vorhergehenden Ansprüche,
**dadurch gekennzeichnet,**
**dass** die erste Kufe (26) und/oder die zweiten Kufen (38, 40) und/oder die dritte Kufe (42, 44, 46) beabstandet zur Spitze des Schneegleiters (10) enden und in eine gemeinsame ebene Spitzenfläche (36) übergehen.

6. Schneegleiter nach zumindest einem der vorhergehenden Ansprüche,
**dadurch gekennzeichnet,**
**dass** die unmittelbar benachbart zu der jeweils zweiten Kufe (38, 40) verlaufende dritte Kufe (42, 44) in Bezug auf längsachsenfernliegender Kante bzw. Begrenzungsfläche (45, 47) einem gebogenen Verlauf folgt.

7. Schneegleiter nach zumindest einem der vorhergehenden Ansprüche,
**dadurch gekennzeichnet,**
**dass** die einem gebogenen Verlauf folgenden Kufen (42, 44, 46, 48, 54, 56, 58, 60, 62, 64) vorzugsweise endseitig eine geringere Breite als spitzenseitig und endseitig einen größeren Krümmungsradius als spitzenseitig aufweisen, wobei insbesondere äußere einem gebogenen Verlauf folgende Kufen sich bis zur Spitze des Schneegleiters (10) erstrecken und/oder äußere einem gebogenen Verlauf folgende Kufen tailliert sind.

8. Schneegleiter nach zumindest einem der vorhergehenden Ansprüche,
**dadurch gekennzeichnet,**
**dass** vorzugsweise die schneegleiterspitzenseitig endenden einem gebogenen Verlauf folgenden Kufen (46, 48, 54, 56, 58, 60, 62, 64) zumindest in einer quer zur Längsachse (16) verlaufenden und im Mittenbereich des Schneegleiters (10) schneidenden Ebene über Stufen bzw. parallel oder in etwa parallel zur Mittelachse (32) des Schneegleiters verlaufende Flächen (45, 47, 66, 68, 70, 72, 74, 76) begrenzt sind, deren Höhen von Stufe zu Stufe in Richtung Seitenlängsränder (50, 52) des Schneegleiters (10) zunehmen, und dass vorzugsweise die Höhe der eine Kufe (26, 38, 40, 42, 44, 46, 48, 54, 56, 58, 60, 62) begrenzenden Stufen bzw. Flächen (28, 30, 39, 41, 45, 47, 66, 68, 70, 72, 74, 76) spitzenseitig geringer als endseitig ist.

9. Schneegleiter nach zumindest einem der vorhergehenden Ansprüche,
**dadurch gekennzeichnet,**
**dass** in der Unterseite (14) des Schneegleiters (10) 2 n + 1 Stufen (26, 38, 40, 42, 44, 46, 48, 54, 56, 58, 60, 62, 64) ausgebildet sind, von denen zumindest 2 n Stufen, vorzugsweise 2 n - 2 Stufen einem in Bezug auf die Längsachse (16) des Schneegleiters (10) gebogenen Verlauf folgen, wobei n > 3, vorzugsweise n = 6 ist.

10. Schneegleiter nach zumindest einem der vorhergehenden Ansprüche,
**dadurch gekennzeichnet,**
**dass** von der Oberseite (12) des Schneegleiters (10) eine Lenkstange (20) mit Griff (22) ausgeht, wobei insbesondere die Lenkstange in Längsrichtung des Schneegleiters und in Richtung dessen Endes (24) klappbar ist.
